# EUROPÄISCHE PATENTSCHRIFT

(11) **EP 2 738 396 B1**
(45) Veröffentlichungstag und Bekanntmachung des Hinweises auf die Patenterteilung: **25.02.2015**
(21) Anmeldenummer: 12008069.2
(22) Anmeldetag: 01.12.2012
(51) Int. Cl.: F16K 11/24, F15B 13/08

(54) **Ventilanordnung**
Valve assembly
Agencement de vannes

(43) Veröffentlichungstag der Anmeldung: 04.06.2014
(73) Patentinhaber: FESTO AG & Co. KG, 73734 Esslingen (DE)
(72) Erfinder: Starzmann, Ralf, D-73262 Reichenbach (DE); Kühbauch, Heiko, D-73257 Köngen (DE)
(74) Vertreter: Patentanwälte Magenbauer & Kollegen Partnerschaft mbB

(56) Entgegenhaltungen:
- EP-A2- 1 059 458
- WO-A2-2009/120942
- DE-A1- 10 036 086
- DE-A1-102008 050 606
- DE-U1- 20 107 330

## Beschreibung

Die Erfindung betrifft eine Ventilanordnung, mit einem Ventilträger und einer Mehrzahl von außen an dem Ventilträger in einer Aufreihungsrichtung aufeinanderfolgend angeordneten, elektrisch betätigbaren Ventilen, wobei im Innern des Ventilträgers ein Aufnahmekanal ausgebildet ist, der eine mit mindestens einer Steuerelektronik ausgestattete, sich in der Aufreihungsrichtung erstreckend Ansteuerplatine aufnimmt, mit der die installierten Ventile zum Empfang von für ihren Betrieb erforderlichen elektrischen Betätigungssignalen elektrisch kontaktiert sind und die über Ansteuer-Schnittstellenmittel zum Empfang von für die Erzeugung der Betätigungssignale verantwortlichen elektrischen Steuersignalen verfügt, und wobei im Innern des Ventilträgers elektrische Versorgungsleitungen für die von der Zufuhr der Steuersignale unabhängige Stromversorgung der Ventile untergebracht sind.

Eine aus der EP 1 710 447 B1 bekannte Ventilanordnung dieser Art enthält einen plattenförmigen, in seiner Längsrichtung segmentierten Ventilträger, der außen über eine Bestückungsfläche verfügt, an der eine Mehrzahl von elektrisch betätigbaren Ventilen montiert ist. Die Ventile sind in einer mit der Längsrichtung des Ventilträgers zusammenfallenden Aufreihungsrichtung aneinandergereiht. Zur elektrischen Betätigung der Ventile erstreckt sich im Innern des Ventilträgers eine mehrteilige Ansteuerplatine, die mit mindestens einer Steuerelektronik ausgestattet ist und die mit den Ventilen elektrisch kontaktiert ist, um die Ventile mit deren Betriebszustand vorgebenden Steuersignalen zu versorgen, welche auf der Grundlage von außen eingespeister elektrischer Betätigungssignale generiert werden. Damit die Ventilanordnung auch bei einer hohen Leistungsaufnahme der einzelnen Ventile zuverlässig arbeitet, enthält die Ansteuerplatine auch noch elektrische Versorgungsleitungen zur Stromversorgung der Ventile unabhängig von den Steuersignalen. Um einem hohen Strombedarf gerecht zu werden, ist die Ventilanordnung mit mehreren Einspeisestellen für die Stromversorgung versehen, was einen relativ hohen konstruktiven Aufwand erfordert und bei entsprechend hoher Anzahl von Ventilen eine nachteilige Vergrößerung der Baulänge der Ventilanordnung mit sich bringt.

Soweit der Anmelderin bekannt ist, ohne einen druckschriftlichen Nachweis hierüber führen zu können, existieren zur Zufuhr der Versorgungsenergie bei Ventilanordnungen auch schon Lösungsvorschläge, bei denen die Ansteuerplatine und elektrische Versorgungsleitungen außerhalb des Ventilträgers angeordnet sind, wobei die Versorgungsleitungen in Form stabförmiger Kupferelemente realisiert sind.

Die DE 100 36 086 A1 beschreibt Maßnahmen zur elektrischen Verbindung von Aktuatoren oder Sensoren mit einem Schaltungsträger. Der Schaltungsträger stützt sich an Anlageelementen eines Gehäuses ab und steht über elastisch nachgiebige Kontaktelemente mit den Aktoren, zum Beispiel Ventile, in elektrischer Verbindung. Mit dem Schaltungsträger sind Steckkontakte eines Steckereinsatzes verbunden, der an dem Gehäuse fixiert ist.

Der Erfindung liegt die Aufgabe zugrunde, Maßnahmen zu treffen, um bei einer Ventilanordnung unter Ermöglichung kompakter Abmessungen eine sichere Stromversorgung auch bei hohem Stromverbrauch zu gewährleisten.

Zur Lösung dieser Aufgabe ist erfindungsgemäß vorgesehen, dass die elektrischen Versorgungsleitungen von bezüglich der Ansteuerplatine separaten Stromleitungsstäben gebildet sind, die unabhängig von der Ansteuerplatine am Ventilträger befestigt sind, wobei sie sich neben der Ansteuerplatine in der Aufreihungsrichtung erstrecken und durch Abgriffskontaktmittel mit der Ansteuerplatine elektrisch kontaktiert sind.

Auf diese Weise ist die Betätigungsenergie für die Ventile der Ventilanordnung unabhängig von den den Betriebszustand der Ventile vorgebenden Steuersignalen zuführbar, wobei zur Bildung der elektrischen Versorgungsleitungen auf Stromleitungsstäbe zurückgegriffen wird, die gesondert bezüglich der Ansteuerplatine ausgebildet sind. Mithin besteht die Möglichkeit, die Stromleitungsstäbe zur Hindurchleitung hoher Stromstärken ohne Beeinträchtigung der Gestaltung der Ansteuerplatine mit einem optimalen großen Querschnitt auszuführen. Dadurch, dass sowohl die Ansteuerplatine als auch die Stromleitungsstäbe im Innern des Ventilträgers untergebracht sind, sind sie bestmöglich von Umgebungseinflüssen abgeschirmt und die Ventilanordnung kann selbst in einer Umgebung mit hoher Luftfeuchtigkeit ohne Funktionsbeeinträchtigung verwendet werden. Die Möglichkeit, den Querschnitt der Stromleitungsstäbe unabhängig von den Abmessungen der Ansteuerplatine zu wählen, ermöglicht bei Bedarf besonders große Leitungsquerschnitte der Stromleitungsstäbe, so dass problemlos eine sehr große Anzahl von Ventilen versorgt werden kann, ohne auf konstruktiv aufwendige Zwischeneinspeisungsmaßnahmen für die Versorgungsspannung zurückgreifen zu müssen. In den meisten Fällen wird eine einzige Einspeiseschnittstelle pro Stromleitungsstab ausreichen, um die Stromversorgung aller Ventile der Ventilanordnung zu gewährleisten.

Vorteilhafte Weiterbildungen der Erfindung gehen aus den Unteransprüchen hervor.

Die Stromleitungsstäbe sind zweckmäßigerweise so konzipiert, dass sie außen über eine Abgriffsfläche verfügen, mit der ein oder mehrere Abgriffskontaktmittel in Kontakt stehen, um den Versorgungsstrom abzugreifen und in die Ansteuerplatine zur Weiterleitung an die einzelnen Ventile zu übertragen. Die Abgriffsfläche ist bevorzugt eben ausgebildet.

Mindestens ein und bevorzugt jeder Stromleitungsstab ist insbesondere so angeordnet, dass die Abgriffsfläche im Aufnahmekanal des Ventilträgers angeordnet ist oder zumindest den Aufnahmekanal begrenzt. Auf diese Weise ist eine unmittelbare Nachbarschaft zur Ansteuerplatine realisierbar, was die Verwendung kurzer Abgriffskontaktmittel gestattet.

Die Abgriffskontaktmittel sind vorzugsweise so ausgebildet, dass sie unter Federvorspannung an der zugeordneten Abgriffsfläche anliegen. Die Abgriffskontaktmittel sind insbesondere in ihrer Gesamtheit als Federkontaktelemente ausgebildet. Auf diese Weise erübrigt sich eine feste Verbindung zwischen den Abgriffskontaktmitteln und den Stromleitungsstäben. Dies erleichtert insbesondere auch die Montage der Ventilanordnung, weil die mit den Federkontaktelementen ausgestattete Ansteuerplatine einfach in den Aufnahmekanal einsteckbar ist, wobei sie beim Einstecken über ihre Federkontaktelemente mit den Stromleitungsstäben kontaktiert wird.

Mindestens ein und vorzugsweise jeder Stromleitungsstab enthält zweckmäßigerweise einen elektrisch leitenden Kernkörper, der aus Metall besteht, wobei sich vor allem eine Kupferlegierung anbietet. Zumindest dort, wo der Stromleitungsstab mit dem Ventilträger in Kontakt steht, ist der Kernkörper zweckmäßigerweise von einem Isolationskörper umhüllt. Empfehlenswert ist dies vor allem dann, wenn der Ventilträger aus Metall besteht. Auf diese Weise werden Kurzschlussströme verhindert. Diejenigen Bereiche des Kernkörpers, die von den Abgriffkontaktmitteln beaufschlagt sind, sind von dem Isolationskörper nicht bedeckt. Vorzugsweise verfügt jeder Stromleitungsstab über eine sich ununterbrochen in der Längsrichtung des Stromleitungsstabes erstreckende Abgriffsfläche für die Abgriffskontaktmittel, die von dem Isolationskörper durchgängig nicht bedeckt ist.

Der Isolationskörper kann beispielsweise eine isolierende, insbesondere aus Kunststoffmaterial bestehende Beschichtung des Kernkörpers sein. Besonders zweckmäßig ist eine Realisierung in Form eines eine gewisse Eigenstabilität aufweisenden, aus isolierendem Material bestehenden Hüllelementes, das auf den Kernkörper aufgesteckt ist.

Die Abgriffskontaktmittel sind zweckmäßigerweise Bestandteile der Ansteuerplatine. Es besteht somit die Möglichkeit, die Stromleitungsstäbe vor der Installation der Ansteuerplatine im Ventilträger zu montieren. Wird anschließend die Ansteuerplatine eingesetzt, gelangen die Abgriffskontaktmittel in Kontakt mit den Stromleitungsstäben.

Die Ansteuerplatine verfügt zweckmäßigerweise über einen Platinenkörper, an dem die Abgriffskontaktmittel befestigt sind.

Jeder Stromleitungsstab ist bevorzugt von mehreren in der Aufreihungsrichtung mit Abstand zueinander angeordneten Abgriffskontaktmitteln kontaktiert. Durch den vielfachen Stromabgriff reduziert sich die Stromstärke innerhalb der einzelnen Abgriffskontaktmittel, was die Möglichkeit bietet, auf geringe Materialquerschnitte zurückzugreifen.

Mindestens ein und bevorzugt jeder Stromleitungsstab ist derart im Ventilträger montiert, dass er in einer im ventilträger ausgebildeten Befestigungsnut gehalten ist, die sich in der Aufreihungsrichtung erstreckt und die zu dem Aufnahmekanal hin offen ist. Vorzugsweise ist jeder Stromleitungsstab mit seinem gesamten Querschnitt innerhalb einer Befestigungsnut aufgenommen. Es ist dabei vorteilhaft, wenn eine zur Kontaktierung der Abgriffskontaktmittel dienende Abgriffsfläche jedes Stromleitungsstabes flächenbündig mit der sich anschließenden Wandfläche des Aufnahmekanals ausgerichtet ist.

Mindestens ein und bevorzugt jeder Stromleitungsstab hat im Querschnitt gesehen bevorzugt eine unrunde Außenkontur. Dies begünstigt eine verdrehsichere Fixierung im Ventilträger ohne aufwendige Maßnahmen. Man kann allein durch Formschluss eine Verdrehsicherung gewährleisten und dafür Sorge tragen, dass eine zur Kontaktierung der Abgriffskontaktmittel dienende Abgriffsfläche die gewünschte Ausrichtung bezüglich der Ansteuerplatine einnimmt und beibehält, sobald der Stromleitungsstab installiert ist.

Besonders zweckmäßig ist eine polygonförmige und hierbei insbesondere sechseckige Außenkontur des Stromleitungsstabes. Es wird bevorzugt eine regelmäßige Polygonkontur gewählt.

Um das positive und negative Spannungspotential zur Verfügung zu stellen, verfügt die Ventilanordnung zweckmäßigerweise über zwei Stromleitungsstäbe, von den einer als Massepol fungiert. Die beiden Stromleitungsstäbe sind zweckmäßigerweise mit Querabtstand im Innern des Ventilträgers angeordnet, wobei sich zwischen ihnen ein Freiraum befindet, in den die Ansteuerplatine hineinragt. Die Ansteuerplatine verfügt über mehrere Abgriffskontaktmittel, von denen erste Abgriffskontaktmittel mit dem einen Stromleitungsstab und zweite Abgriffskontaktmittel mit dem anderen Stromleitungsstab in elektrischer Verbindung stehen.

Wenn die Abgriffskontaktmittel unter Federvorspannung an den Stromleitungsstäben anliegen, lässt sich eine vorteilhafte Bauform realisieren, bei der die Ansteuerplatine kraftschlüssig zwischen den beiden Stromleitungsstäben gehalten ist.

Es ist weiterhin vorteilhaft, wenn die Ansteuerplatine über mehrere Abstützpfosten verfügt, durch die sie an der Wand des Aufnahmekanals abgestützt ist. Durch die Abstützung wird insbesondere eine Gegenkraft zu Federkontaktmitteln geliefert, die den Ventilen zugeordnet sind und die zum Empfang der Betätigungssignale an der Ansteuerplatine anliegen.

Der Aufnahmekanal des Ventilträgers ist zweckmäßigerweise nach Art einer Nut ausgebildet und verfügt daher über eine längsseitige schlitzförmige Öffnung, die als Montageöffnung für die Montage der Ansteuerplatine nutzbar ist. Durch die Montageöffnung hindurch kann die Ansteuerplatine bequem in den Aufnahmekanal eingesteckt werden. Eine bevorzugt vorhandene Abdeckleiste ermöglicht es, die Montageöffnung nach der Montage der Ansteuerplatine zu verschließen und das Eindringen von Verunreinigungen oder Feuchtigkeit zu verhindern.

Die Ansteuerplatine kann als ein Teil oder auch mehrteilig ausgeführt sein. Bei einer mehrteiligen Ausführung enthält sie mehrere in der Aufreihungsrichtung aneinandergereihte Platinenelemente, die zumindest elektrisch miteinander verbindbar oder verbunden sind. Verbindungs-Schnittstellenmittel an jedem Platinenelement ermöglichen es, aufeinanderfolgende Platinenelemente elektrisch zu verketten. Abgesehen von diesen elektromechanischen Verbindungen sind die Platinenelemente in mechanischer Hinsicht bevorzugt nicht aneinander befestigt, wenngleich die Möglichkeit besteht, die Platinenelemente zusätzlich zur elektromechanischen verbindung auch noch rein mechanisch stabil miteinander zu koppeln. Der mehrteilige Aufbau begünstigt eine modulare Zusammenstellung der Ventilanordnung. Je nach gewünschter Baulänge der Ventilanordnung und der gewünschten Menge von Ventilen lässt sich eine entsprechende Anzahl von Platinenelementen zur Bildung der Ansteuerplatine heranziehen.

Mindestens eines der miteinander gekoppelten Platinenelemente verfügt über die Ansteuer-Schnittstellenmittel zur Einspeisung der für die Generierung der Betätigungssignale verantwortlichen Steuersignale.

Nachfolgend wird die Erfindung anhand der beiliegenden Zeichnung näher erläutert. In dieser zeigen:
- Figur 1: in perspektivischer Darstellung eine bevorzugte Ausführungsform der erfindungsgemäßen ventilanordnung, die der besseren Übersichtlichkeit wegen partiell abgeschnitten dargestellt ist,
- Figur 2: die Ventilanordnung aus Figur 1 in einer Seitenansicht mit Blickrichtung gemäß Pfeil II aus Figur 1 bei nichtmontierter Abdeckleiste der Montageöffnung,
- Figur 3: einen Längsschnitt durch die Ventilanordnung aus Figuren 1 und 2 gemäß Schnittlinie III-III, und

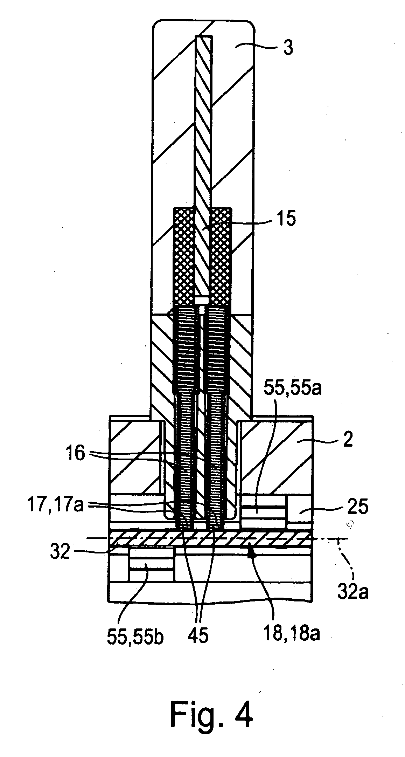

- Figur 4: einen Ausschnitt der Ventilanordnung im Bereich eines am Ventilträger montierten Ventils in einem Schnitt gemäß Schnittline IV-IV aus Figur 3.

Die in ihrer Gesamtheit mit Bezugsziffer 1 bezeichnete Ventilanordnung enthält einen Ventilträger 2, der mit einer Vielzahl von elektrisch betätigbaren Ventilen 3 bestückt ist, vorzugsweise in lösbarer Weise. Die Ventile 3 sind dazu ausgebildet, eine Fluidströmung zu steuern. Exemplarisch haben sie eine 2/2-Funktionalität, so dass sie als Absperrventile arbeiten, die in der Lage sind, eine Fluidströmung durch sie hindurch entweder zu unterbinden oder zuzulassen.

Der Ventilträger 3 hat bevorzugt eine längliche Erstreckung mit einer Längsachse 4. Beim Ausführungsbeispiel ist er einstückig ausgebildet. Bei einer nicht illustrierten Variante setzt sich der Ventilträger 2 aus einzelnen, in Längsrichtung aneinandergereihten Ventilträgermodulen zusammen.

Vorzugsweise besteht der Ventilträger 2 aus Metall, insbesondere aus Aluminiummaterial oder aus Edelstahl.

An seiner längsseitigen Außenseite ist der Ventilträger 2 mit einer Bestückungsfläche 5 versehen, an der die Ventile 3 angeordnet sind. Beim Ausführungsbeispiel sind die Ventile 3 individuell montiert. Beispielsweise sind sie jeweils mittels eines Montagehakens 6 und einer Befestigungsschraube 7 lösbar befestigt.

Die Ventile 3 sind an der Bestückungsfläche 5 in einer durch eine strichpunktierte Linie illustrierten Aufreihungsrichtung 8 aufeinanderfolgend angeordnet. Die Aufreihungsrichtung 8 fällt zweckmäßigerweise mit der Achsrichtung der Längsachse 4 zusammen. In jedem Ventil 3 verlaufen mehrere Ventilkanäle 12, die zu einer der Bestückungsfläche 5 zugewandten Grundfläche 13 des betreffenden Ventils 3 ausmünden. Im Innern des Ventils 3 führen die ventilkanäle 12 zu strichpunktiert angedeuteten Ventilmitteln 14, die ein bewegliches Ventilglied enthalten, das beim Ausführungsbeispiel wahlweise in einer Offenstellung oder in einer Schließstellung positionierbar ist, um den Fluidübertritt zwischen einem ersten (12a) und einem zweiten (12b) der Ventilkanäle 12 wahlweise freizugeben oder abzusperren.

Die Ventilmittel 14 sind durch eine strichpunktiert angedeutete, elektrisch aktivierbare Betätigungseinrichtung 15 jedes Ventils 3 betätigbar. Die Betätigungseinrichtung 15 des Ausführungsbeispiels ist eine Elektromagneteinrichtung. Alternativ können auch andere elektrisch aktivierbare Betätigungseinrichtungen 15 zur Einwendung kommen, beispielsweise Piezoantriebe.

Die Aktivierung der Betätigungseinrichtung 15 erfolgt durch elektrische Betätigungssignale, die über elektrische Anschlussmittel 16 des Ventils 3 einspeisbar sind. Die elektrischen Anschlussmittel 16 enthalten jeweils einen Anschlussendabschnitt 17, der im Bereich der Grundfläche 13 über die Grundfläche 13 vorsteht. Bevorzugt ist der Anschluss-Endabschnitt 17 mit Federkontaktmitteln 17a versehen, um bei der Kontaktierung einer noch zu erläuternden Ansteuerplatine 18 eine toleranzunabhängig sichere elektrische Verbindung zu gewährleisten.

Die Bestückungsfläche 5 ist in der Aufreihungsrichtung 8 in mehrere Bestückungsplätze 5a unterteilt, an denen jeweils eines der Ventile 3 montiert ist. Zu jedem Bestückungsplatz 5a münden zwei das Hindurchleiten eines Fluides ermöglichende Ventilträgerkanäle 22 aus, die im Ventilträger 2 verlaufen. Ein erster (22a) dieser Ventilträgerkanäle 22 ist ein Speisekanal, ein zweiter (22b) Ventilträgerkanal 22 fungiert als Arbeitskanal.

Die beiden Ventilkanäle 12, 12a, 12b münden so an der Grundfläche 13 aus, dass sie mit jeweils einem der beiden Ventilträgerkanäle 22, 22a, 22b verbunden sind.

Alle ersten Ventilträgerkanäle 22a kommunizieren mit einem den Ventilträger 3 in Längsrichtung durchsetzenden Versorgungskanal 23, der zu einem nicht weiter illustrierten Anschlussmittel führt, durch das hindurch ein unter Überdruck stehendes Druckmedium in den Versorgungskanal 23 einspeisbar ist, das mithin auch ständig in allen ersten Ventilträgerkanälen 22a ansteht. Das Druckmedium ist insbesondere Druckluft.

Die zweiten Ventilträgerkanäle 22b münden individuell mit je einer Arbeitsöffnung 24 zur Außenfläche des Ventilträgers 2 aus. Dort können bei Bedarf externe Fluidleitungen angeschlossen werden, die zu einem oder mehreren Verbrauchern führen.

Im Betrieb der Ventilanordnung 1 sind die Ventile 3 individuell durch über die Anschlussmittel 16 einspeisbare elektrische Steuersignale derart betätigbar, dass sie jeweils das im Versorgungskanal 23 anstehende Druckmedium in den zweiten Ventilträgerkanal 22b durchlassen oder zurückhalten. Auf diese Weise kann der Fluidaustritt aus dem zweiten ventilträgerkanal 22b gesteuert werden.

Aus der Arbeitsöffnung 24 austretendes Druckmedium, insbesondere Druckluft, kann beispielsweise dazu verwendet werden, um bei impulsartigem Fluidaustritt eine Sortierfunktion bezüglich sich vorbeibewegenden Gegenständen auszuführen.

Im Innern des Ventilträgers 2 ist ein Aufnahmekanal 25 ausgebildet, der sich in der Aufreihungsrichtung 8 erstreckt und zumindest eine Länge hat, die sich über die gesamte Länge der Bestückungsfläche 5 erstreckt. Dieser Aufnahmekanal 25 nimmt die schon erwähnte Ansteuerplatine 18 auf.

Vorzugsweise ist der Aufnahmekanal 25 nach Art einer Längsnut längsseits außen in den Ventilträger 2 eingebracht. Er verfügt daher über eine schlitzförmige Öffnung, die aufgrund ihrer Funktion als Montageöffnung 26 bezeichnet sei. Die Ansteuerplatine 18 kann durch die Montageöffnung 26 hindurch in den Aufnahmekanal 25 eingesetzt werden und bei Bedarf auch wieder entnommen werden.

Die Montageöffnung 26 befindet sich zweckmäßigerweise an einer längsseitigen Außenfläche 27 des Ventilträgers 2, die an die Bestückungsfläche 5 angrenzt und insbesondere rechtwinkelig zu der Bestückungsfläche 5 verläuft.

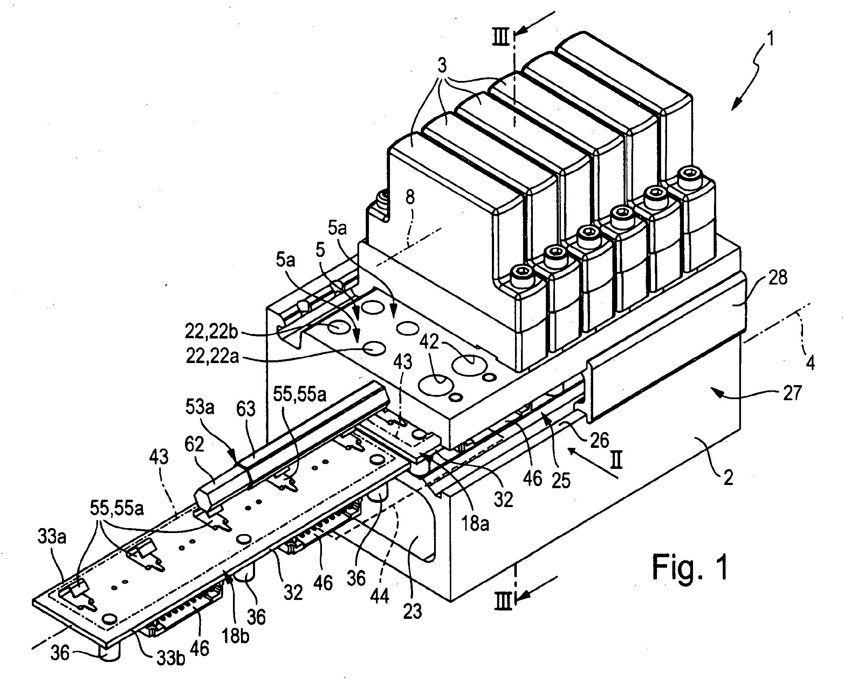

Zweckmäßigerweise ist die Ventilanordnung 1 mit einer Abdeckleiste 28 ausgestattet, die lösbar in einer die Montageöffnung 26 dicht verschließenden Abdeckstellung am Ventilträger 2 anbringbar ist. Die Abdeckleiste 28 ist insbesondere durch eine Rastverbindung am Ventilträger 2 fixierbar. In Figur 1 ist die Abdeckleiste 28 mit nur einem Teil ihrer Länge illustriert, so dass man sowohl die offene Montageöffnung 26 erkennen kann als auch die Abdeckfunktion der Abdeckleiste 28 ersichtlich ist.

Die Ansteuerplatine 18 hat eine Längserstreckung und ist derart in dem Aufnahmekanal 25 angeordnet, dass sie sich mit ihrer Längsrichtung in der Aufreihungsrichtung 8 der Ventile 3 erstreckt.

Die Ansteuerplatine 18 enthält einen über eine Flachgestalt verfügenden Platinenkörper 32, der zweckmäßigerweise derart ausgerichtet ist, dass seine Hauptausdehnungsebene 32a parallel zu der Bestückungsfläche 5 verläuft.

Der Platinenkörper 32 hat längsseits eine hintere Längskante 33a und eine diesbezüglich entgegengesetzte vordere Längskante 33b. Die hintere Längskante 33a ist der der Montageöffnung 26 gegenüberliegenden Grundfläche 34 des Aufnahmekanals 25 zugewandt. Die vordere Längskante 33b weist zu der Montageöffnung 26.

Ihre erwähnte, bevorzugte Ausrichtung erfährt die Ansteuerplatine 18 exemplarisch dadurch, dass die mit ihrer hinteren Längskante 33a in eine in der Grundfläche 34 ausgebildete, sich in der Aufreihungsrichtung 8 erstreckende Zentriernut 35 des Ventilträgers 2 eingreift und sich außerdem mittels mehreren Abstützpfosten 36 an einer der Bestückungsfläche 5 zugewandten unteren Wandfläche 37 des Aufnahmekanals 25 abstützt.

Die Abstützpfosten 36 sind in einer Mehrzahl vorhanden und mit Abstand zueinander in der Aufreihungsrichtung 8 verteilt an der der unteren Wandfläche 37 zugewandten Unterseite 38a des Platinenkörpers 32 angeordnet. Die Abstützpfosten 36 sind mit dem Platinenkörper 32 fest verbunden, beispielsweise durch eine Schraubbefestigung oder Klebeverbindung.

In dem Ventilträger 2 ist pro Bestückungsplatz 5a mindestens eine Durchbrechung 42 ausgebildet, die einerseits zu der Bestückungsfläche 5 und andererseits ins Innere des Aufnahmekanals 25 ausmündet. Jedes Ventil 3 ragt mit seinen Anschlussmitteln 16 durch mindestens eine solche Durchbrechung 42 hindurch und in den Aufnahmekanal 25 hinein. Dabei stützen sich die Anschlussmittel 16 im Innern des Aufnahmekanals 25 mit ihren Federkontaktmitteln 17a an der der Unterseite 38a entgegengesetzten Oberseite 38b des Platinenkörpers 32 ab, und zwar zweckmäßigerweise in einem Bereich, der genauso weit von der hinteren Längskante 33a beabstandet ist wie die Abstützpfosten 36. Auf diese Weise wird die Ansteuerplatine 18 in einem zu der hinteren Längskante 33a beabstandeten Bereich von oben her durch die Federkontaktmittel 17a beaufschlagt und mit ihren Abstützpfosten 36 an die untere Wandfläche 37 angedrückt. Dadurch erfährt die Ansteuerplatine 18 eine exakte Ausrichtung im Innern des Aufnahmekanals 25.

Die Ansteuerplatine 18 ist mit mindestens einer Steuerelektronik 43 ausgestattet, die für die Erzeugung der an die Ventile 3 zu übermittelnden elektrischen Betätigungssignale verantwortlich ist. Exemplarisch ist die Ansteuerplatine 18 mit mehreren Steuerelektroniken 43 ausgestattet, was dadurch begründet ist, dass sich die Ansteuerplatine 18 aus mehreren in der Aufreihungsrichtung 8 aneinandergereihten Platinenelementen 18a, 18b zusammensetzt. Jedes dieser Platinenelemente 18a, 18b enthält eine eigene Steuerelektronik 43. Die Mehrteiligkeit ermöglicht es, eine Ansteuerplatine 18 mit variabler Länge durch Aneinanderreihung einer beliebigen Anzahl von Platinenelementen auszubilden.

Jedes Platinenelement 18a, 18b verfügt über einen Längenabschnitt des Platinenkörpers 32, wobei zwischen diesen Längenabschnitten keine direkte mechanische Verbindung vorliegt. Es handelt sich also bei den Platinenelementen 18a, 18b um individuelle Baueinheiten. Allerdings sind jeweils unmittelbar aufeinanderfolgend angeordnete Platinenelemente 18a, 18b durch elektrische Verbindungsleiter 44 elektromechanisch miteinander verbunden, so dass sich eine elektrische Busverkettung ergibt, die sich über sämtliche Platinenelemente 18a, 18b hinweg erstreckt. Die elektrischen Verbindungsleiter 44 sind vorzugsweise in Form eines oder mehrerer flexibler Kabel realisiert, wobei zweckmäßigerweise ein Flachbandkabel zur Anwendung gelangt.

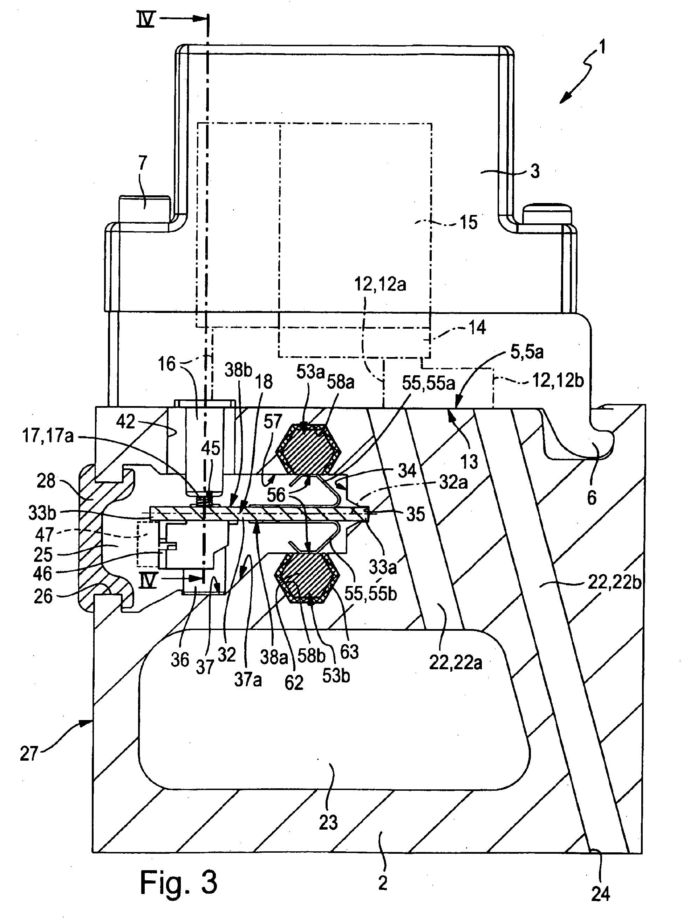

Um die elektrische Verkettung der Platinenelemente 18a, 18b untereinander zu ermöglichen, weist jedes Platinenelement 18a, 18b zwei in der Aufreihungsrichtung 8 mit Abstand zueinander angeordnete Verkettungsschnittstellen 46 auf. Zur Herstellung der elektrischen Verbindung der beiden Platinenelemente 18a, 18b werden die elektrischen Verbindungsleiter 44 an die in der Aufreihungsrichtung 8 benachbart zueinander angeordneten Verkettungsschnittstellen 46 des jeweils einen und jeweils anderen Platinenelementes 18a, 18b angeschlossen. Hierzu können die Verbindungsleiter 44 endseitig über in Figur 3 angedeutete Stecker 47 verfügen, die in die als Gegenstecker ausgebildeten Verkettungsschnittstellen 46 einsteckbar sind.

Auf Verkettungsschnittstellen 46 kann verzichtet werden, wenn eine von Hause aus nur einteilige Ansteuerplatine 18 zum Einsatz kommt.

Zur Montage der Ansteuerplatine 18 können die einzelnen Platinenelemente 18a, 18b entweder einzeln oder gemeinsam durch die offene Montageöffnung 26 hindurch in den Aufnahmekanal 25 eingesteckt werden. Die elektrischen Verbindungsleiter 44 werden entweder zuvor oder anschließend angebracht.

An der Oberseite 38b des Platinenkörpers 32 befindet sich eine der Anzahl der Anschluss-Endabschnitte 17 entsprechende Anzahl von mit der zugeordneten Steuerelektronik 43 elektrisch in Verbindung stehenden Kontaktflächen 45. Sie sind so angeordnet, dass an jeder Kontaktfläche 45 einer der bevorzugt als Federkontaktmittel 17a ausgebildeten Anschluss-Endabschnitte 17 der Ventile 3 anliegt. Auf diese Weise sind alle Ventile 3 mit jeweils einer Steuerelektronik 43 elektrisch verbunden.

Die Ansteuerplatine 18 enthält im Folgenden als Ansteuer-Schnittstellenmittel 48 bezeichnete elektromechanische Schnittstellenmittel, die zum Empfang von für die Erzeugung der elektrischen Betätigungssignale verantwortlichen elektrischen Steuersignalen ausgebildet sind. Die elektrischen Steuersignale werden üblicherweise von einer nicht abgebildeten elektronischen Steuereinrichtung geliefert, die an die Ansteuer-Schnittstellen-mittel 48 angeschlossen ist und bei der es sich um eine externe Einrichtung oder um einen internen Bestandteil der Ventilanordnung 1 handelt.

Wenn die Ansteuerplatine 18 mit Verkettungsschnittstellen 46 ausgestattet ist, wird zweckmäßigerweise eine nicht zur elektrischen Verkettung genutzte Verkettungsschnittstelle 46 als Ansteuer-Schnittstellenmittel 48 verwendet. Dies trifft auf das Ausführungsbeispiel zu. Dort wird eine einem axialen Endbereich der Ansteuerplatine 18 zugeordnete Verkettungsschnittstelle 46 als Ansteuer-Schnittstellenmittel 48 genutzt, wobei gestrichelt bei 52 Steuerleitungen angedeutet sind, die von einer nicht abgebildeten elektronischen Steuereinrichtung kommen und an die Ansteuer-Schnittstellenmittel 48 angeschlossen sind.

Die für die Betätigung der Ventile 3 erforderliche elektrische Versorgungsenergie wird nicht über die Ansteuer-Schnittstellenmittel 48 hinweg bereitgestellt, sondern mittels zweier elektrisch leitend ausgebildeter Stromleitungsstäbe 53a, 53b. Diese Stromleitungsstäbe 53a, 53b fungieren als interne elektrische Versorgungsleitungen des Ventilträgers 2 und ermöglichen eine von der Zufuhr der elektrischen Steuersignale unabhängige Stromversorgung der Ventile 3.

Die Stromleitungsstäbe 53a, 53b sind im Innern des Ventilträgers 2 platziert, separat bezüglich der Ansteuerplatine ausgebildet und auch unabhängig von der Ansteuerplatine 18 am Ventilträger 2 befestigt.

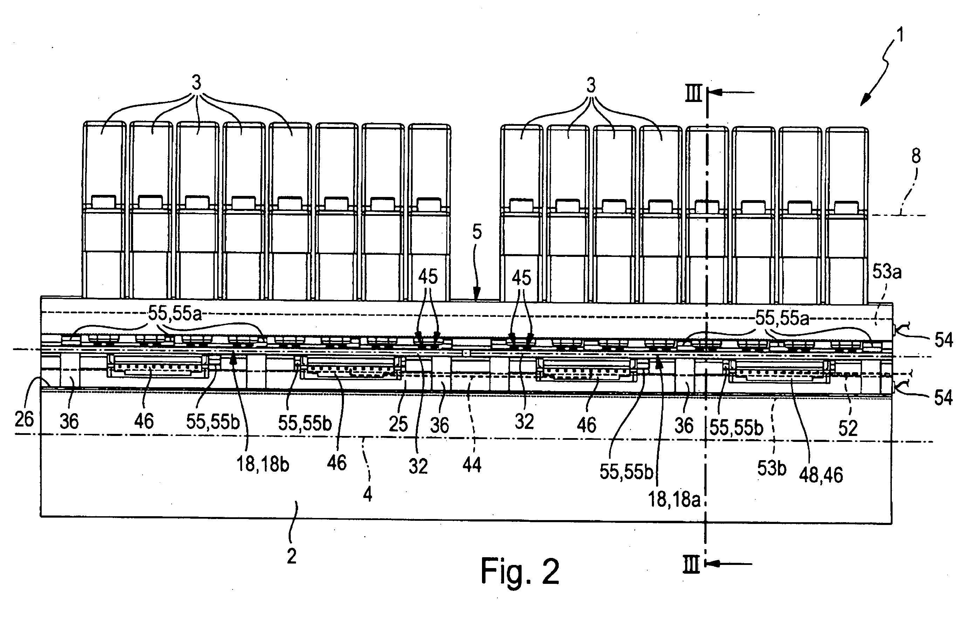

Die Figuren 2 und 3 machen deutlich, dass sich die beiden Stromleitungsstäbe 53a, 53b im Innern des Ventilträgers 2 neben der Ansteuerplatine 18 in der Aufreihungsrichtung 8 erstrecken. Jeder Stromleitungsstab 53a, 53b hat zweckmäßigerweise eine lineare Ausdehnung und eine zu der Aufreihungsrichtung 8 parallele Längsachse.

An jedem Stromleitungsstab 53a, 53b ist eine Einspeiseschnittstelle 54 angeordnet, die insbesondere an einer Stirnfläche platziert ist. Dort lässt sich ein zu einer Stromversorgungseinrichtung führendes elektrisches Kabel anschließen. Der eine Stromleitungsstab 53a definiert den Pluspol, der andere Stromleitungsstab 53b den Minuspol bzw. Masse.

Die Ansteuerplatine 18 weist mehrere Abgriffskontaktmittel 55 auf, durch die sie mit beiden Stromleitungsstäben 53a, 53b elektrisch kontaktiert ist. Bevorzugt enthält die Ansteuerplatine 18 eine Reihe von in der Aufreihungsrichtung 8 mit Abstand zueinander angeordneten ersten Abgriffskontaktmitteln 55a und eine Reihe von in der Aufreihungsrichtung 8 ebenfalls mit Abstand zueinander angeordneten zweiten Abgriffskontaktmitteln 55b. Über die ersten Abgriffskontaktmittel 55a erfolgt die elektrische Kontaktierung zu dem einen, ersten Stromleitungsstab 53a, während über die zweiten Abgriffskontaktmittel 55b die Kontaktierung zu dem anderen, zweiten Stromleitungsstab 53b erfolgt.

Dadurch, dass die Ansteuerplatine 18 mit jedem Stromleitungsstab 53a, 53b über mehrere Abgriffskontaktmittel 55a , 55b kontaktiert ist, verteilt sich die Strombelastung bei der Übertragung der elektrischen Versorgungsenergie von den Stromleitungsstäben 53a, 53b zu der mindestens einen Steuerelektronik 43.

Indem die Abgriffskontaktmittel 55 als unmittelbare Bestandteile der Ansteuerplatine 18 ausgebildet sind - bevorzugt sind sie an dem Platinenkörper 32 befestigt - können sie unmittelbar beim Einführen der Ansteuerplatine 18 in den Aufnahmekanal 25 mit den Stromleitungsstäben 53a, 53b kontaktiert werden. Bevorzugt sind die beiden Stromleitungsstäbe 53a, 53b so im Ventilträger 2 platziert, dass sie quer zu der Hauptausdehnungsebene 32a beidseits des Platinenkörpers 32 zu liegen kommen. Die Ansteuerplatine 18 ragt mit ihrem der hinteren Längskante 33a zugeordneten Abschnitt des Platinenkörpers 32 zwischen die sich mit Querabstand gegenüberliegenden Stromleitungsstäbe 53a, 53b hinein. Exemplarisch sind die Stromleitungsstäbe 53a, 53b in einer zu der Bestückungsfläche 5 rechtwinkeligen Richtung mit Abstand zueinander angeordnet und definieren zwischen sich einen Freiraum, der breiter ist als die Dicke des Platinenkörpers 32.

Die Abgriffskontaktmittel 55 sind in dem zwischen den beiden Stromleitungsstäben 53a, 53b liegenden Abschnitt des Platinenkörpers 32 angeordnet. Die ersten Abgriffskontaktmittel 55a befinden sich an der Oberseite 38b und die zweiten Abgriffskontaktmittel 55b an der Unterseite 38a des Platinenkörpers 32. Zweckmäßigerweise liegen die Abgriffskontaktmittel 55 in einer Ebene, die auch die Längsachsen der beiden Stromleitungsstäbe 53a, 53b enthält.

Jedes Abgriffskontaktmittel 55 ist elektrisch leitend mit einer Steuerelektronik 43 der Ansteuerplatine 18 verbunden. Jedes Abgriffskontaktmittel 55 überbrückt einen zwischen dem Platinenkörper 32 und einem Stromleitungsstab 53a, 53b vorhandenen Abstand und liegt elektrisch leitend an einer am betreffenden Stromleitungsstab 53a, 53b ausgebildeten Abgriffsfläche 56 an. Auf diese Weise ist eine elektrisch leitende Verbindung zwischen dem Stromleitungsstab 53a, 53b und mindestens einer Steuerelektronik 53 der Ansteuerplatine 18 hergestellt.

Die Abgriffsfläche 56 ist bevorzugt eben ausgebildet und erstreckt sich insbesondere durchgehend über die gesamte axiale Länge des betreffenden Stromleitungsstabes 53a, 53b.

Dadurch, dass die Abgriffskontaktmittel 55 nur lose, insbesondere unter Vorspannung, an der zugeordneten Abgriffsfläche 56 anliegen, kann erreicht werden, dass die Abgriffskontaktmittel 55 mit den Abgriffsflächen 56 in Kontakt gelangen, wenn die Ansteuerplatine 18 durch die Montageöffnung 26 hindurch in den Aufnahmekanal 25 hineingeschoben wird.

Der Aufnahmekanal 25 ist einerseits von der oben schon erwähnten unteren Wandfläche 37 begrenzt und darüberhinaus von einer gegenüberliegenden, der unteren Wandfläche 37 zugewandten oberen Wandfläche 57. Beide Wandflächen 37, 57 sind, wie auch die Grundfläche 34, zweckmäßigerweise direkt vom Ventilträger 2 gebildet. Der erste Stromleitungsstab 53a ist bevorzugt im Bereich der oberen Wandfläche 57 angeordnet und der zweite Stromleitungsstab 53b im Bereich der unteren Wandfläche 37.

Beim Ausführungsbeispiel sind die Abgriffskontaktmittel 55 als Federkontaktelemente ausgebildet, wobei sie unter Federvorspannung an der zugeordneten Abgriffsfläche 56 anliegen. Die Federvorspannung ist vorzugsweise derart groß gewählt, dass die Ansteuerplatine 18 mit den Abgriffskontaktmitteln 55 zwischen den beiden Stromleitungsstäben 53a, 53b federnd verspannt ist und dadurch kraftschlüssig gehalten wird. Auch ohne zusätzliche Befestigungsmaßnahme kann auf diese Weise gewährleistet werden, dass die Ansteuerplatine 18 ihre gewählte Einbaulage beibehält.

Im Bereich der Montageöffnung 26 ist der Aufnahmekanal 25 zweckmäßigerweise breiter als im Bereich der Abgriffsflächen 56. Dadurch kann die Ansteuerplatine 18 bei ihrer Montage bequem ohne oder mit nur geringem federndem Zusammendrücken der Abgriffskontaktmittel 55 eingeführt werden. Mindestens eine der beiden Wandflächen 37, 57 - exemplarisch nur die untere Wandfläche 37 - weist bevorzugt mindestens einen eine Führungsfläche 37a für die zugeordneten Abgriffskontaktmittel 55 bildenden schrägen Flächenabschnitt auf, in dessen Bereich sich die Breite des Aufnahmekanals 25 bis auf den zwischen den Abgriffsflächen 56 vorhandenen Abstand verringert. Dadurch werden die Abgriffskontaktmittel 55, wenn die Ansteuerplatine 18 in den Aufnahmekanal 25 eingeschoben wird, kontinuierlich zusammengedrückt, bis sie bei den Abgriffsflächen 56 angelangt sind. Dies erleichtert die Montage.

Grundsätzlich können die Stromleitungsstäbe 53a, 53b auf unterschiedliche Weise am Ventilträger 2 fixiert sein. Als besonders vorteilhaft wird die beim Ausführungsbeispiel realisierte Variante angesehen, bei der jeder Stromleitungsstab 53a, 53b in einer eigenen Befestigungsnut 58a, 58b zumindest teilweise aufgenommen und gehalten ist, die in dem ventilträger 2 ausgebildet ist und sich in der Aufreihungsrichtung 8 erstreckt. Jede Befestigungsnut 58a, 58b ist zu dem Aufnahmekanal 25 hin offen, so dass die Abgriffsfläche 56 des darin gehaltenen Stromleitungsstabes 53a, 53b für die Abgriffskontaktmittel 55 zugänglich ist.

Exemplarisch ist die eine Befestigungsnut 58a in der oberen Wandfläche 57 und die andere Befestigungsnut 58b in der unteren Wandfläche 37 des Aufnahmekanals 25 ausgebildet.

Der Stromleitungsstab 53a, 53b ist zweckmäßigerweise mit seinem gesamten Querschnitt im Innern der Befestigungsnut 58a, 58b aufgenommen. Die Abgriffsfläche 56 verläuft dabei zweckmäßigerweise bündig mit den sich an die Nutöffnung der Befestigungsnut 58a, 58b anschließenden Flächenabschnitten der oberen und unteren Wandfläche 57, 37. Bei einem abweichenden Ausführungsbeispiel ragt der Stromleitungsstab 53a, 53b mit einem die Abgriffsfläche 56 aufweisenden Abschnitt seines Querschnitts aus der längsseitigen Nutöffnung der Befestigungsnut 58a, 58b heraus.

Von Vorteil ist es, wenn der Stromleitungsstab 53a, 53b verdrehgesichert in der zugeordneten Befestigungsnut 58a, 58b fixiert ist, so dass er um seine Längsachse nicht relativ zum Ventilträger 2 verdrehbar ist. Dies gewährleistet eine stets konstante Ausrichtung der Abgriffsfläche 56 bezüglich der zugeordneten Reihe daran anliegender Abgriffskontaktmittel 55a, 55b.

Die unverdrehbare Fixierung wird beim Ausführungsbeispiel dadurch realisiert, dass der Stromleitungsstab 53a, 53b außen eine unrunde Querschnittskontur hat, was prinzipiell beispielsweise durch eine ovale Außenkontur oder durch eine teils abgerundete und teils abgeflachte Außenkontur realisierbar wäre. Bevorzugt wird eine dahingehende Gestaltung, dass die im Querschnitt gesehene Außenkontur des Stromleitungsstabes 53a, 53b eine - bevorzugt regelmäßige - Polygonform hat. Exemplarisch ist ein sechseckiger Querschnitt realisiert. Der Querschnitt der zugeordneten Befestigungsnut 58a, 58b ist komplementär gestaltet. Eine der mehreren Außenflächen jedes Stromleitungsstabes 53a, 53b bildet die Abgriffsfläche 56.

Abweichend vom illustrierten Ausführungsbeispiel kann der Stromleitungsstab 53a, 53b im Querschnitt gesehene zum Beispiel auch eine runde und insbesondere kreisrunde Außenkontur haben.

Der Stromleitungsstab 53a, 53b ist beispielsweise durch eine axiale Einschubmontage in der zugeordneten Befestigungsnut 58a, 58b fixiert. Seine bezüglich des Ventilträgers 2 eingenommene Axiallage kann durch nicht abgebildete stirnseitige Stützelemente fixiert werden, wobei diese Stützelemente beispielsweise durch stirnseitige Abschlussdeckel des Ventilträgers 2 gebildet sein können.

Wenn der Ventilträger 2, was beim Ausführungsbeispiel der Fall ist, aus einem Metall besteht, sollten die Stromleitungsstäbe 53a, 53b diesbezüglich elektrisch isoliert sein. Bevorzugt wird dies dadurch erreicht, dass jeder Stromleitungsstab 53a, 53b aus mehreren Komponenten zusammengesetzt ist. Eine als Kernkörper 62 bezeichnete Komponente jedes Stromleitungsstabes 53a, 53b ist elektrisch leitend aus Metall hergestellt und besteht vorzugsweise aus Kupfer. Sie bildet auch die Abgriffsfläche 56. Eine weitere Komponente besteht aus einem bevorzugt aus Kunststoffmaterial bestehenden Isolationskörper 63, der den Kernkörper 62 an seinem Außenumfang mit Ausnahme des von der Abgriffsfläche 56 gebildeten Bereiches umhüllt. Auf diese Weise befindet sich ein Isolationskörper 63 zwischen dem Kernkörper 62 und der Wandfläche der Befestigungsnut 58a, 58b, so dass ein elektrisch leitender Kontakt zwischen dem Kernkörper 62 und dem Ventilträger 2 verhindert ist.

Der Isolationskörper 63 kann beispielsweise als Beschichtung fest haftend auf den Kernkörper 62 aufgebracht sein. Beim Ausführungsbeispiel ist er in Gestalt eines bezüglich der Kernkörpers 62 eigenständigen Hüllelementes ausgeführt, das entsprechend der zu isolierenden Außenkontur des Kernkörpers 62 profiliert ist und auf den Kernkörper 62 aufgesteckt ist.

Zweckmäßigerweise sind die Außenkontur des Kernkörpers 62 und die Innenkontur des separaten Isolationskörpers 63 derart aufeinander abgestimmt, dass der Kernkörper 62 relativ zum Isolationskörper 63 nicht verdrehbar ist. Die im Querschnitt gesehene Außenkontur des Kernkörpers 62 und Innenkontur des Isolationskörpers 63 ist zweckmäßigerweise in gleicher Weise konturiert wie der Außenumfang des Stromleitungsstabes 53a, 53b, der partiell vom Isolationskörper 63 und im Übrigen von der Abgriffsfläche 56 des Kernkörpers 62 definiert wird.

Durch die gezeigte Anordnung der Stromleitungsstäbe 53a, 53b sind die Abgriffsflächen 56 im Aufnahmekanal 25 angeordnet, wobei sie quasi einen Abschnitt der Wandfläche des Aufnahmekanals 25 bilden, die den Aufnahmekanal 25 begrenzt.

Wenn der Ventilträger 2 zumindest im Bereich der Befestigungsnuten 58a, 58b aus elektrisch nichtleitendem Material besteht, kann bei den Stromleitungsstäben 53a, 53b auf den Isolationskörper 63 verzichtet werden und jeder Stromleitungsstab 53a, 53b kann dann insgesamt aus Metall und insbesondere Kupfer bestehen.

Durch den geschilderten Aufbau wird erreicht, dass die Ansteuerplatine 18 und die Stromleitungsstäbe 53 a, 53b von der Umgebung abgekapselt im Innern des Ventilträges 2 untergebracht sind und dadurch vor Umgebungseinflüssen, insbesondere auch vor Feuchtigkeit, abgeschirmt sind. In diesem Zusammenhang versteht es sich, dass der Aufnahmekanal 25 nicht nur an der Montageöffnung 26 dicht verschließbar ist, sondern auch an seinen an beiden einander entgegensetzten Stirnseiten durch nicht weiter illustrierte Verschlusselemente des Ventilträgers 2 verschlossen sind. Die Verschlusselemente sind beispielsweise von stirnseitigen Abschlussdeckeln des Ventilträgers 2 gebildet.

Die geschützte Unterbringung der Stromleitungsstäbe 53a, 53b im Innern des Ventilträgers 2 hat auch den Vorteil, dass sie nicht versehentlich berührt werden können, was bei den auftretenden hohen Stromstärken ein hohes Verletzungspotential mit sich bringen würde.

Beim Ausführungsbeispiel arbeitet jede Steuerelektronik 43 vereinfacht gesagt vergleichbar mit einem Relais. Basierend auf den elektrischen Steuersignalen, die unabhängig von dem mittels den Stromleitungsstäben 53a, 53b zugeführten Versorgungsstrom in die Ansteuerplatine 18 eingespeist werden, werden unter Verwendung der an den Stromleitungsstäben 53a, 53b anliegenden Versorgungsspannung die den Ventilen zugeführten Betätigungssignale generiert.

## Patentansprüche

1. Ventilanordnung, mit einem ventilträger (2) und einer Mehrzahl von außen an dem Ventilträger (2) in einer Aufreihungsrichtung (8) aufeinanderfolgend angeordneten, elektrisch betätigbaren Ventilen (3), wobei im Innern des Ventilträgers (2) ein Aufnahmekanal (25) ausgebildet ist, der eine mit mindestens einer Steuerelektronik (43) ausgestattete, sich in der Aufreihungsrichtung (8) erstreckend Ansteuerplatine (18) aufnimmt, mit der die installierten Ventile (3) zum Empfang von für ihren Betrieb erforderlichen elektrischen Betätigungssignalen elektrisch kontaktiert sind und die über Ansteuer-Schnittstellenmittel (48) zum Empfang von für die Erzeugung der Betätigungssignale verantwortlichen elektrischen Steuersignalen verfügt, und wobei im Innern des Ventilträgers (2) elektrische Versorgungsleitungen für die von der Zufuhr der Steuersignale unabhängige Stromversorgung der Ventile (3) untergebracht sind, **dadurch gekennzeichnet, dass** die elektrischen Versorgungsleitungen von bezüglich der Ansteuerplatine (18) separaten Stromleitungsstäben (53a, 53b) gebildet sind, die unabhängig von der Ansteuerplatine (18) am Ventilträger (2) befestigt sind, wobei sie sich neben der Ansteuerplatine (18) in der Aufreihungsrichtung (8) erstrecken und durch Abgriffskontaktmittel (55) mit der Ansteuerplatine (18) elektrisch kontaktiert sind.

2. Ventilanordnung nach Anspruch 1, **dadurch gekennzeichnet, dass** jeder Stromleitungsstab (53a, 53b) außen eine mit mindestens einem der Abgriffskontaktmittel (55) in elektrisch leitendem Kontakt stehende Abgriffsfläche (56) aufweist, die bevorzugt eben ausgebildet ist.

3. Ventilanordnung nach Anspruch 2, **dadurch gekennzeichnet, dass** mindestens ein Stromleitungsstab (53a, 53b) so angeordnet ist, dass seine Abgriffsfläche (56) in dem Aufnahmekanal (25) angeordnet ist und/oder den Aufnahmekanal (25) begrenzt.

4. Ventilanordnung nach Anspruch 2 oder 3, **dadurch gekennzeichnet, dass** die Abgriffskontaktmittel (55) unter Federvorspannung an der zugeordneten Abgriffsfläche (56) anliegen.

5. Ventilanordnung nach einem der Ansprüche 2 bis 4, **dadurch gekennzeichnet, dass** mindestens ein Stromleitungsstab (53a, 53b) einen elektrisch leitenden, aus Metall bestehenden Kernkörper (62) und einen den Kernkörper (62) abgesehen von der Abgriffsfläche (56) zumindest im Kontaktbereich mit dem Ventilträger (2) umhüllenden Isolationskörper (63) aufweist, wobei der Isolationskörper (63) zweckmäßigerweise in Form eines auf den Kernkörper (62) aufgesteckten Hüllelementes ausgeführt ist.

6. Ventilanordnung nach einem der Ansprüche 1 bis 5, **dadurch gekennzeichnet, dass** die Abgriffskontaktmittel (55) als Federkontaktelemente ausgebildet sind.

7. Ventilanordnung nach einem der Ansprüche 1 bis 6, **dadurch gekennzeichnet, dass** die Abgriffskontaktmittel (55) als Bestandteile der Ansteuerplatine (18) ausgebildet sind, wobei die Ansteuerplatine (18) zweckmäßigerweise einen Platinenkörper (32) aufweist, an dem die Abgriffskontaktmittel (55) befestigt sind.

8. Ventilanordnung nach einem der Ansprüche 1 bis 7, **dadurch gekennzeichnet, dass** jeder Stromleitungsstab (53a, 53b) von mehreren in der Aufreihungsrichtung (8) mit Abstand zueinander angeordneten Abgriffskontaktmitteln (55) kontaktiert ist.

9. Ventilanordnung nach einem der Ansprüche 1 bis 8, **dadurch gekennzeichnet, dass** mindestens ein Stromleitungsstab (53a, 53b) in einer längsseits zu dem Aufnahmekanal (25) hin offenen, sich in der Aufreihungsrichtung (8) erstreckenden Befestigungsnut (58a, 58b) des Ventilträgers (2) zumindest teilweise aufgenommen und gehalten ist.

10. Ventilanordnung nach Anspruch 9, **dadurch gekennzeichnet, dass** der Stromleitungsstab (53a, 53b) verdrehgesichert in dem Ventilträger (2) fixiert ist.

11. Ventilanordnung nach einem der Ansprüche 1 bis 10, **dadurch gekennzeichnet, dass** mindestens ein Stromleitungsstab (53a, 53b) im Querschnitt gesehen eine unrunde Außenkontur aufweist, wobei er zweckmäßigerweise eine polygonförmige und hierbei insbesondere sechseckige Außenkontur aufweist.

12. Ventilanordnung nach einem der Ansprüche 1 bis 11, **dadurch gekennzeichnet, dass** die Ansteuerplatine (18) zwischen zwei sich mit Querabstand gegenüberliegende Stromleitungsstäbe (53a, 53b) hineinragt und über voneinander unabhängige Abgriffskontaktmittel (55, 55a, 55b) mit beiden Stromleitungsstäben (53a, 53b) kontaktiert ist, wobei die Ansteuerplatine (18) zweckmäßigerweise federnd kraftschlüssig zwischen den beiden Stromleitungsstäben gehalten ist.

13. Ventilanordnung nach einem der Ansprüche 1 bis 12, **dadurch gekennzeichnet, dass** die Ansteuerplatine (18) mit mehreren Abstützpfosten (36) versehen ist, durch die sie an einer Wandfläche (37) des Aufnahmekanals (25) abgestützt ist.

14. Ventilanordnung nach einem der Ansprüche 1 bis 13, **dadurch gekennzeichnet, dass** der Aufnahmekanal (25) längsseits eine von dem Ventilträger (2) begrenzte, schlitzförmige Montageöffnung (26) für die Ansteuerplatine (18) aufweist und die Ventilanordnung (1) zweckmäßigerweise über eine zum Verschließen der Montageöffnung (26) lösbar an dem Ventilträger (2) anbringbare oder angebrachte Abdeckleiste (28) verfügt.

15. Ventilanordnung nach einem der Ansprüche 1 bis 14, **dadurch gekennzeichnet, dass** sich die Ansteuerplatine (18) aus mehreren in der Aufreihungsrichtung (8) aneinandergereihten und elektrisch miteinander verbindbaren oder verbundenen Platinenelementen (18a, 18b) zusammensetzt, die zweckmäßigerweise jedes mit mindestens einer Steuerelektronik (43) ausgestattet ist und von denen mindestens eines die Ansteuer-Schnittstellenmittel (48) für den Empfang der Steuersignale aufweist.

## Claims

1. Valve assembly, comprising a valve support (2) and a plurality of electrically actuated valves (3) arranged consecutively on the outside of the valve support (2) in a line-up direction (8), wherein, in the interior of the valve support (2), there is formed a reception passage (25) which accommodates a control circuit board (18) equipped with at least one electronic control unit (43) and extending in the line-up direction (8), to which circuit board the installed valves (3) are electrically contacted for the reception of electric actuating signals required for their operation, and which circuit board is provided with control interfacing means (48) for the reception of electric control signals responsible for the generation of the actuating signals, and wherein electric supply lines for a power supply of the valves (3) which is independent of the supply of the control signals are accommodated in the interior of the valve support (2), **characterised in that** the electric supply lines are represented by current-conducting bars (53a, 53b) which are separate from the control circuit board (18) and secured to the valve support (2) independently of the control circuit board (18), extending in the line-up direction (8) adjacent to the control circuit board (18) and electrically contacted to the control circuit board (18) by pickup contact means (55).

2. Valve assembly according to claim 1, **characterised in that** each current-conducting bar (53a, 53b) has a pickup surface (56) on the outside, which is in electrically conducting contact with at least one of the pickup contact means (55) and which is preferably designed to be flat.

3. Valve assembly according to claim 2, **characterised in that** at least one current-conducting bar (53a, 53b) is arranged such that its pickup surface (56) is located in the reception passage (25) and/or bounds the reception passage (25).

4. Valve assembly according to claim 2 or 3, **characterised in that** the pickup contact means (55) bear against the associated pickup surface (56) under spring preload.

5. Valve assembly according to any of claims 2 to 4, **characterised in that** at least one current-conducting bar (53a, 53b) comprises an electrically conducting core body (62) made of metal and an insulating body (63) which surrounds the core body (62), apart from the pickup surface (56), at least in the contact region with the valve support (2), the insulating body (63) being expediently designed as a sheathing element pushed onto the core body (62).

6. Valve assembly according to any of claims 1 to 5, **characterised in that** the pickup contact means (55) are designed as spring contact elements.

7. Valve assembly according to any of claims 1 to 6, **characterised in that** the pickup contact means (55) are designed as components of the control circuit board (18), the control circuit board (18) expediently comprising a circuit board body (32) to which the pickup contact means (55) are secured.

8. Valve assembly according to any of claims 1 to 7, **characterised in that** each current-conducting bar (53a, 53b) is contacted by a plurality of pickup contact means (55) arranged at a distance from one another in the line-up direction (8).

9. Valve assembly according to any of claims 1 to 8, **characterised in that** at least one current-conducting bar (53a, 53b) is at least partially accommodated and held in a mounting groove (58a, 58b) of the valve support (2), which is longitudinally open towards the reception passage (25) and extends in the line-up direction (8).

10. Valve assembly according to claim 9, **characterised in that** the current-conducting bar (53a, 53b) is non-rotatably located in the valve support (2).

11. Valve assembly according to any of claims 1 to 10, **characterised in that** at least one current-conducting bar (53a, 53b) has a non-circular external contour in cross-section, expediently having a polygonal and in particular hexagonal external contour.

12. Valve assembly according to any of claims 1 to 11, **characterised in that** the control circuit board (18) projects between two current-conducting bars (53a, 53b) placed opposite one another at a transverse distance and is contacted to the two current-conducting bars (53a, 53b) via mutually independent pickup contact means (55, 55a, 55b), the control circuit board (18) expediently being held resiliently and non-positively between the two current-conducting bars.

13. Valve assembly according to any of claims 1 to 12, **characterised in that** the control circuit board (18) is provided with a plurality of support posts (36) by means of which it is supported on a wall surface (37) of the reception passage (25).

14. Valve assembly according to any of claims 1 to 13, **characterised in that** the reception passage (25) has along its long side a slot-shaped installation opening (26) bounded by the valve support (2) for the installation of the control circuit board (18), and **in that** the valve assembly (1) expediently comprises a cover strip (28) which can be or is releasably attached to the valve support (2) for closing the installation opening (26).

15. Valve assembly according to any of claims 1 to 14, **characterised in that** the control circuit board (18) is made up from a plurality of circuit board elements (18a, 18b), which are lined up in the line-up direction (8) and can be or are electrically connected to one another, and each of which is expediently provided with at least one electronic control unit (43) and at least one of which comprises control interfacing means (48) for the reception of the control signals.

## Revendications

1. Ensemble de soupapes, comprenant un support de soupape (2) et une pluralité de soupapes (3) actionnables électriquement et disposées côté extérieur au niveau du support de soupape (2) dans une direction d'alignement (8), les unes après les autres, sachant qu'est formé, à l'intérieur du support de soupape (2), un canal de réception (25) qui reçoit une platine de commande (18) équipée d'au moins une électronique de commande (43) s'étendant dans la direction d'alignement (8), électronique de commande (43) avec laquelle les soupapes (3) installées sont mises en contact électriquement pour recevoir des signaux d'actionnement électrique requis pour leur fonctionnement et laquelle dispose de moyens d'interface de commande (48) pour recevoir des signaux de commande électriques en charge de la génération des signaux d'actionnement, et sachant que des conduites d'alimentation électrique pour l'alimentation en courant, ne dépendant pas de l'arrivée des signaux de commande, des soupapes (3) sont logées à l'intérieur du support de soupape (2), **caractérisé en ce que** les conduites d'alimentation électrique sont formées par des barres conductrices de courant (53a, 53b) séparées par rapport à la platine de commande (18), lesquelles sont fixées indépendamment de la platine de commande (18) au niveau du support de soupape (2), sachant qu'elles s'étendent à côté de la platine de commande (18) dans la direction d'alignement (8) et sont mises en contact électriquement avec la platine de commande (18) par des moyens de contact de prise (55).

2. Ensemble de soupapes selon la revendication 1, **caractérisé en ce que** chaque barre conductrice de courant (53a, 53b) présente côté extérieur une surface de prise (56) en contact électroconducteur avec au moins un des éléments de contact de prise (55), laquelle surface de prise est formée de préférence de manière plane.

3. Ensemble de soupapes selon la revendication 2, **caractérisé en ce qu'**au moins une barre conductrice de courant (53a, 53b) est disposée de telle manière que sa surface de prise (56) est disposée dans le canal de réception (25) et/ou délimite le canal de réception (25).

4. Ensemble de soupapes selon la revendication 2 ou 3, **caractérisé en ce que** les moyens de contact de prise (55) reposent au niveau de la surface de prise (56) associée sous une précontrainte élastique.

5. Ensemble de soupapes selon l'une quelconque des revendications 2 à 4, **caractérisé en ce qu'**au moins une barre conductrice de courant (53a, 53b) présente un corps central (62) électroconducteur, composé de métal et un corps isolant (63) enveloppant le corps central (62), abstraction faite de la surface de prise (56), au moins dans la zone de contact avec le support de soupape (2), sachant que le corps isolant (63) est réalisé de manière appropriée sous la forme d'un élément d'enveloppe enfilé sur le corps central (62).

6. Ensemble de soupapes selon l'une quelconque des revendications 1 à 5, **caractérisé en ce que** les moyens de contact de prise (55) sont réalisés sous la forme d'éléments de contact à ressorts.

7. Ensemble de soupapes selon l'une quelconque des revendications 1 à 6, **caractérisé en ce que** les moyens de contact de prise (55) sont réalisés sous la forme de composants de la platine de commande (18), sachant que la commande de platine (18) présente de manière appropriée un corps de platine (32) au niveau duquel les moyens de contact de prise (55) sont fixés.

8. Ensemble de soupapes selon l'une quelconque des revendications 1 à 7, **caractérisé en ce que** chaque barre conductrice de courant (53a, 53b) est mise en contact par plusieurs moyens de contact de prise (55) disposés à distance les uns des autres dans la direction d'alignement (8).

9. Ensemble de soupapes selon l'une quelconque des revendications 1 à 8, **caractérisé en ce qu'**au moins une barre conductrice de courant (53a, 53b) est reçue au moins en partie et est maintenue dans une rainure de fixation (58a, 58b), ouverte côté longitudinal en direction du canal de réception (25) et s'étendant dans la direction d'alignement (8), du support de soupape (2).

10. Ensemble de soupapes selon la revendication 9, **caractérisé en ce que** la barre conductrice de courant (53a, 53b) est fixée de manière bloquée en rotation dans le support de soupape (2).

11. Ensemble de soupapes selon l'une quelconque des revendications 1 à 10, **caractérisé en ce qu'**au moins une barre conductrice de courant (53a, 53b) présente, vue dans la section transversale, un contour extérieur non circulaire, sachant qu'elle présente de manière appropriée un contour extérieur de forme polygonale et, dans le cas présent, en particulier, un contour extérieur hexagonal.

12. Ensemble de soupapes selon l'une quelconque des revendications 1 à 11, **caractérisé en ce que** la platine de commande (18) fait saillie entre deux barres conductrices de courant (53a, 53b) se faisant face selon une distance transversale et est mise en contact avec deux barres conductrices de courant (53a, 53b) par l'intermédiaire de moyens de contact de prise (55, 55a, 55b) indépendants les uns des autres, sachant que la platine de commande (18) est maintenue de manière appropriée à force de manière élastique entre les deux barres conductrices de courant.

13. Ensemble de soupapes selon l'une quelconque des revendications 1 à 12, **caractérisé en ce que** la platine de commande (18) est pourvue de plusieurs montants de soutien (36), par lesquels elle s'appuie au niveau d'une surface de paroi (37) du canal de réception (25).

14. Ensemble de soupapes selon l'une quelconque des revendications 1 à 13, **caractérisé en ce que** le canal de réception (25) présente côté longitudinal une ouverture de montage (26), en forme d'entaille et délimitée par le support de soupape (2), pour la platine de commande (18), et **en ce que** l'ensemble de soupapes (1) dispose de manière appropriée d'une baguette de recouvrement (28) pouvant être placée ou placée de manière amovible au niveau du support de soupape (2) pour fermer l'ouverture de montage (26).

15. Ensemble de soupapes selon l'une quelconque des revendications 1 à 14, **caractérisé en ce que** la platine de commande (18) se compose de plusieurs éléments de platine (18a, 18b) alignés dans la direction d'alignement (8) et pouvant être reliés ou reliés les uns aux autres électriquement, lesquels sont équipés respectivement de manière appropriée d'au moins une électronique de commande (43) et parmi lesquels au moins un présente les moyens d'interface de commande (48) pour la réception des signaux de commande.
